Europäisches Patentamt

European Patent Office

Office européen des brevets

(19)

(11) Veröffentlichungsnummer: **0 256 328**
**B1**

(12) # EUROPÄISCHE PATENTSCHRIFT

(45) Veröffentlichungstag der Patentschrift:
03.10.90

(51) Int. Cl.⁵: **B23Q 3/157**

(21) Anmeldenummer: 87110486.5

(22) Anmeldetag: 20.07.87

(54) Werkzeugmagazin für insbesondere Fräs- und Bohrmaschinen.

(30) Priorität: 13.08.86 DE 3627515

(43) Veröffentlichungstag der Anmeldung:
24.02.88 Patentblatt 88/8

(45) Bekanntmachung des Hinweises auf die Patenterteilung:
03.10.90 Patentblatt 90/40

(84) Benannte Vertragsstaaten:
CH DE FR GB IT LI

(56) Entgegenhaltungen:
EP-A- 0 072 865
FR-A- 2 529 127
FR-A- 2 547 230
US-A- 4 196 506

(73) Patentinhaber: MAHO Aktiengesellschaft,
Postfach 1280 Tiroler Strasse 85, D-8962 Pfronten(DE)

(72) Erfinder: Babel, Werner, Achweg 19,
D-8962 Pfronten-Meilingen(DE)

(74) Vertreter: Patentanwälte Beetz sen. - Beetz jun. Timpe -
Siegfried - Schmitt-Fumian, Steinsdorfstrasse 10,
D-8000 München 22(DE)

ACTORUM AG

## Beschreibung

Die Erfindung betrifft ein Werkzeugmagazin für insbesondere Fräs- und Bohrmaschinen der im Oberbegriff des Patentanspruchs 1 angegebenen Gattung.

Ein derartiges Werkzeugmagazin ist aus der DE-OS 34 47 706 der Anmelderin bekannt. Die Besonderheit bei diesem Magazin besteht darin, daß für den Ein- und Ausbau der Werkzeuge in die bzw. aus der Horizontal- oder der Vertikal-Spindel kein gesonderter Werkzeugwechsler benötiger wird, welcher bei herkömmlichen Werkzeugwechsel-Systemen den Transport und das Einsetzen der Werkzeuge zwischen dem Werkzeugmagazin und der jeweiligen Arbeitsspindel übernimmt. Durch das Verschwenken des Werkzeugmagazins mit einer oder zwei Reihen von Werkzeugaufnahmen in die unterhalb des Werkstücktisches vorgesehene Abstellposition wird die Gefahr von Kollisionen zwischen dem Magazin und dem Werkstück bzw. dem Spindelstock ausgeschaltet, wobei der gesamte normale Arbeitsbereich der jeweiligen Werkzeugmaschine voll ausgenutzt werden kann.

Trotz der bei diesem bekannten Werkzeugmagazin vorhandenen Klappe zur Abdeckung des mit den Werkzeugen besetzten Werkzeugträgers in seiner unteren Abstellposition ist nicht mit ausreichender Zuverlässigkeit gewährleistet, daß insbesondere die Werkzeugkegel von Ablagerungen, wie Spänen, Schmutzpartikeln und/oder Spülflüssigkeit, freibleiben. Derartige Ablagerungen an den Werkzeugkegeln können zu Problemen beim Einsetzen und Festklemmen der Werkzeuge in die Arbeitsspindeln führen.

Aus der US-A 4 196 506 ist es bekannt, mit Schutzkappen versehene Werkzeugkegel in einem Tellermagazin anzuordnen. Jede Schutzkappe ist gesondert in je einer Werkzeugaufnahme des Tellermagazins festgelegt.

Aufgabe der Erfindung ist es, ein Werkzeugmagazin der genannten Gattung so weiterzubilden, daß zumindest die Einspanndorne bzw. die Werkzeugkegel gegen Ablagerungen von Spänen, Spülflüssigkeit od. dgl. zuverlässig geschützt werden.

Diese Aufgabe wird erfindungsgemäß durch die kennzeichnenden Merkmale des Patentanspruchs 1 gelöst.

Durch die zusätzliche Abdeckung gemäß der Erfindung wird sichergestellt, daß die in der unteren Abstellposition befindlichen Werkzeugkegel von in diesem Bereich herumfliegenden Spänen und Spülflüssigkeitsspritzern freigehalten werden, wodurch ein problemloser Einbau in die jeweilige Arbeitsspindel gewährleistet wird. Die Schutzabdeckung ist in Form einer Reihe von an die Form der Werkzeugkegel angepaßten Hütchen ausgebildet und an einer zum Werkzeugträger parallelen Leiste montiert, die durch ein an mindestens einem Ende angreifendes Hebelgestänge in die Offen- bzw. Schließstellung bewegt wird, und zwar in Abhängigkeit von der jeweiligen Schwenkbewegung der Magazin-Schwenkarme. Durch eine Kulissenführung am inneren Ende des im kastenförmig ausgebildeten Schwenkarm untergebrachten Schwenkhebelgestänges wird eine Bewegungskopplung der Schutzabdeckung mit den Schwenkarmen erreicht, wobei die Schutzabdeckung von den Werkzeugkegeln erst unmittelbar vor Erreichen ihrer Wechselposition angenommen wird.

Die notwendige Koordination der Öffnungs- und Schließbewegung der Klappe mit den entsprechenden Schwenkbewegungen des Magazins erfolgt zweckmäßig durch eine Lagerung der Klappe an zwei seitlich am Werkstücktisch befestigten Tragarmen und durch eine Kulissenführung, die durch Eingriff eines Zapfens in einen Schlitz erst in einer bestimmten Winkellage der Schwenkarme wirksam wird.

Im folgenden wird ein Ausführungsbeispiel der Erfindung anhand der Zeichnung im einzelnen beschrieben. Es zeigen:

Fig. 1 perspektivisch den Werkstücktisch einer Konsol-Fräsmaschine mit einem Werkzeugmagazin in der oberen Wechselstellung;

Fig. 2 perspektivisch den Werkstücktisch mit dem Werkzeugmagazin in der unteren Abstellposition.

Bei dem in der Zeichnung dargestellten Ausführungsbeispiel ist das Werkzeugmagazin 1 an den Werkstücktisch 2 einer - nicht dargestellten - Konsol-Fräsmaschine angebaut. Das Werkzeugmagazin enthält einen horizontalen Werkzeugträger 3, an dem eine Reihe von Werkzeugaufnahmen 4 befestigt sind, die in bekannter Weise zur sicheren Halterung der - nicht dargestellten - Werkzeugkegel ausgelegt sind. Der horizontale Werkzeugträger 3 ist mit seinen beiden Stirnseiten an je einem Schwenkarm 5, 6 starr befestigt, deren anderes Ende über je eine Nabe 7, 8 auf einer gemeinsamen horizontalen Welle 9 festgelegt sind. Diese Welle 9 ist im Werkstücktisch 2 gelagert und wird durch einen Stellzylinder 10 und eine Kurbel 11 verdreht.

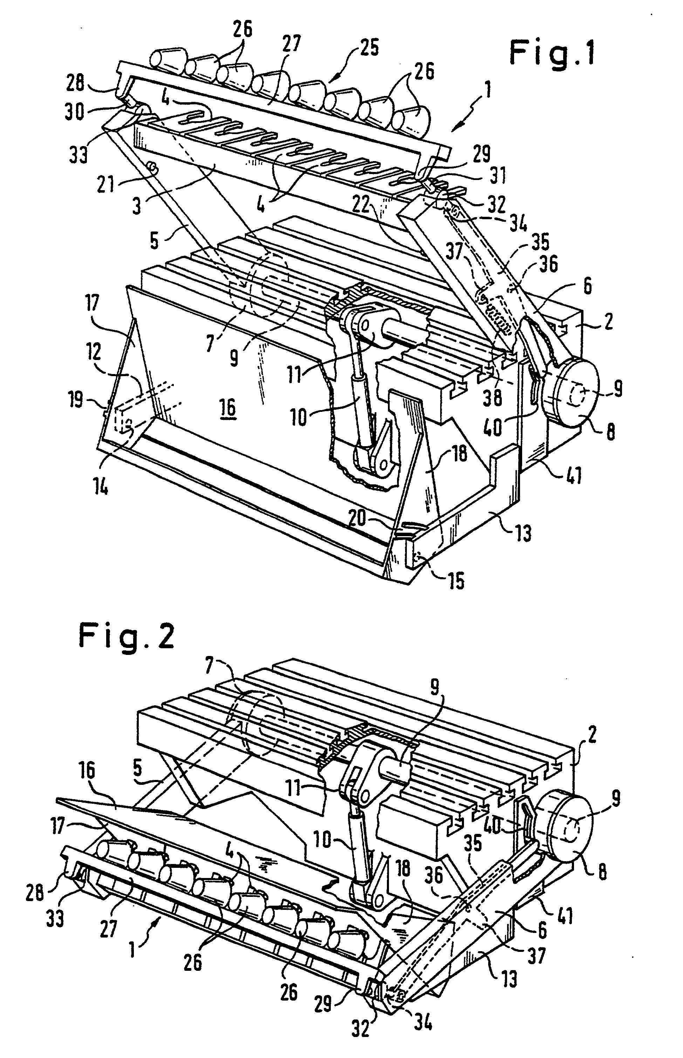

An jeder Seitenwand des Werkstücktisches 2 ist ein abgewinkelter Tragarm 12, 13 starr befestigt, an dessen frei vorkragendem Endteil je ein Lagerzapfen 14, 15 angeordnet ist. Diese miteinander fluchtenden Zapfen 14, 15 dienen zur schwenkbaren Lagerung einer haubenförmigen Klappe 16 und greifen in entsprechende Bohrungen in deren Seitenwänden 17, 18 ein. In einer zu den Lagerzapfen 14, 15 geeigneten Lage ist an jeder Seitenwand 17, 18 eine Schlitzführung 19, 20 vorgesehen, in welche ein an der Innenseite jedes Schwenkarms 5, 6 befestigter Stift 21, 22 während der Bewegung der Schwenkarme in Eingriff gelangt. Die Lage der Schlitze 19, 20 gegenüber den Lagerzapfen 14, 15 an den Seitenwänden 17, 18 der haubenförmigen Klappe 16 ist so gewählt, daß durch den Eingriff der Zapfen 21, 22 die Klappe 16 von den Schwenkarmen 5, 6 nacheilend mitgenommen wird und aus der Stellung nach Fig. 1 in die Stellung nach Fig. 2 schwenkt.

Bei dem dargestellten Ausführungsbeispiel ist zusätzlich zu der Klappe 16 eine Abdeckung 25 für die im Magazin enthaltenen Werkzeugkegel vorgesehen, die eine Reihe von Schutzhütchen (26) in einer der Werkzeugplätze entsprechenden Anzahl und Anordnung enthält, die an einer zum Werkzeugträger 3 parallel verlaufenden durchgehenden Leiste 27 befestigt sind. An den Endabschnitten dieser Leiste 27 sind rückwärtige Queransätze 28, 29 angeformt oder starr befestigt, die zusammen mit Gelenkzapfen 30, 31 je einen Winkelhebel bilden. Je ein Drehgelenk 32, 33 ist über einen weiteren diametral gegenüberliegenden Gelenkzapfen 34 mit dem freien Ende eines Doppelhebels 35 gelenkig verbunden, der in den jeweiligen kastenförmigen Schwenkarm 5, 6 eingebaut und in diesem um einen mittleren Zapfen 36 gelenkig gelagert ist. An einem Quersteg 37 jedes Doppelhebels 35 greift eine Feder 38 an, die ein geeignetes Drehmoment auf den Doppelhebel ausübt. Am anderen Ende des Doppelhebels befindet sich ein Querstift, der zusammen mit einem in etwa vertikalen abgewinkelten Bogenschlitz 40 in je einem an jeder Seitenwand des Werkstücktischs 2 befestigten Steg 41 eine Kulissenführung bildet.

Das vorstehend beschriebene Werkzeugmagazin 1 mit seiner Schutzabdeckung 25 für die einzelnen Werkzeugkegel funktioniert wie folgt:

In der in Fig. 2 dargestellten Abstellposition befinden sich die in den Werkzeugaufnahmen 4 des Werkzeugträgers 3 eingesetzten Werkzeuge unter der in die dargestellte Schließstellung geschwenkten Klappe 16, wobei ihre nach oben weisenden Werkzeugkegel von den Schutzhütchen 26 vollständig dicht umschlossen sind. Für den Werkzeugwechsel in einer nicht dargestellten Arbeitsspindel wird der Stellzylinder 10 mit Druckmittel beaufschlagt, der über die Kurbel 11 und die Welle 9 die Schwenkarme 5, 6 aus der Stellung nach Fig. 2 in die angehobene Wechselposition gemäß Fig. 1 bewegt. In dieser Wechselposition befinden sich die - nicht dargestellten - Werkzeuge incl. der Werkzeugkegel in einer senkrechten Lage und können durch eine Vorschubbewegung des Vertikalkopfes die jeweiligen Werkzeuge übergeben bzw. aufnehmen. Die Kinematik des aus dem Doppelhebel 35, den Gelenkzapfen 30, 31 und 32 gebildeten Hebelstänges ist durch entsprechende Formgebung des abgewinkelten Langlochs 40 so getroffen, daß eine gesonderte Abhebebewegung der Abdeckung 25 von den Werkzeugkegeln erst unmittelbar vor Erreichen der eigentlichen Wechselposition erfolgt. Bei der Aufschwenkbewegung der Schwenkhebel 5, 6 in die Wechselstellung nach Fig. 1 wird die Klappe 16 in die in Fig. 1 dargestellte Stellung verschwenkt, in der sie durch ihr Eigengewicht verbleibt, bis die Stifte 21, 22 bei einer Absenkbewegung des Magazins in die Schlitzführungen 19, 20 eingreifen und die Klappe in die Schließstellung mitnehmen.

Die Erfindung ist nicht auf das dargestellte Ausführungsbeispiel beschränkt. So können beispielsweise die Doppelhebel nicht in die Schwenkarme integriert sein, sondern parallel zu diesen angeordnet werden. Darüber hinaus können statt des Hebelstänges auch in geeigneter Weise positionierte Zahnkettenantriebe Verwendung finden. Schließlich können die einzelnen Schutzhütchen 26 durch einen durchgehenden trichterförmigen Trog gebildet sein, der durch innere Querwände in eine entsprechende Anzahl von Einzelkammern unterteilt ist.

## Patentansprüche

1. Werkzeugmagazin für insbesondere Fräs- und Bohrmaschinen, mit einem eine Reihe von Werkzeugaufnahmen (4) enthaltenden geraden Werkzeugträger (3), mit seitlich am Werkstücktisch (2) angeordneten Schwenkarmen (6), die den Werkzeugträger (3) motorisch zwischen einer unteren Abstellposition und einer oberen Wechselstellung bewegen, und mit einer synchron mit den Schwenkarmen (6) betätigbaren Klappe (16), welche die Werkzeuge in der Abstellposition unterhalb des Werkstücktisches (2) abdeckt, dadurch gekennzeichnet, daß eine bewegliche Abdeckung (25) mit Schutzhütchen (26) für die Werkzeugeinspannkegel parallel zum Werkzeugträger (3) angeordnet ist, die zusammen mit dem Werkzeugträger (3) bewegbar und in der oberen Wechselstellung durch eine Bewegungskopplung mit den Schwenkarmen (6) von den Werkzeugeinspannkegeln abhebbar bzw. auf diese absenkbar ausgebildet ist.

2. Werkzeugmagazin nach Anspruch 1, dadurch gekennzeichnet, daß Schutzhütchen (26) an einer Leiste (27) montiert sind, welche über ein Hebelgestänge (30 bis 35) schwenkbar an den Schwenkarmen (6) befestigt ist.

3. Werkzeugmagazin nach Anspruch 2, dadurch gekennzeichnet, daß das Hebelgestänge einen im kastenförmigen Schwenkarm (5, 6) mittig gelagerten Doppelhebel (35) enthält, der mit seinem einen Ende in einer am Werkzeugtisch befestigten Kulisse (40) geführt ist und dessen anderes Ende über Gelenkzapfen (34) eines Drehgelenks (32) an einem an der Leiste (27) starr befestigten Winkelhebel (28, 30) angeschlossen ist.

4. Werkzeugmagazin nach einem der Ansprüche 1 bis 3, dadurch gekennzeichnet, daß für jedes Werkzeug bzw. jeden Werkzeugeinspannkegel ein an seine Form genau angepaßtes Schutzhütchen (26) vorgesehen ist.

5. Werkzeugmagazin nach einem der Ansprüche 1 bis 3, dadurch gekennzeichnet, daß die Schutzhütchen durch einen an der Leiste (27) befestigten und durch Querwände in Kammern unterteilten Trog gebildet sind.

6. Werkzeugmagazin nach einem der Ansprüche 1 bis 5, dadurch gekennzeichnet, daß die Klappe (16) zwischen zwei am Werkstücktisch (2) befestigten horizontalen Tragarmen (13) gelagert ist und daß an den Schwenkarmen (5, 6) Mitnehmerstifte (21, 22) befestigt sind, die in bestimmten Schwenkstellungen mit Schlitzführungen (19, 20) an den Seitenwänden (17, 18) der haubenförmigen Klappe (16) in und außer Eingriff gelangen und dabei die Klappe (16) öffnen und schließen.

## Revendications

1. Magasin d'outils, en particulier pour fraiseuses et aléseuses, comprenant un porte-outils (3) droit, contenant une rangée de réceptions d'outils (4), des bras pivotants (6), disposés latéralement sur la table porte-pièce (2), qui déplacent le porte-outils (3) sous l'action d'un moteur entre une position de dépose inférieure et une position d'échange supérieure, ainsi qu'un capot (16) manœuvrable en synchronisme avec les bras pivotants (6) et recouvrant les outils à la position de dépose, où ils se trouvent sous la table porte-pièce (2), caractérisé en ce que un recouvrement mobile (25), comprenant de petits chapeaux protecteurs (26) pour les cônes de serrage des outils, est disposé parallèlement au porte-outils (3) et est déplaçable ensemble avec le porte-outils (3), le recouvrement étant agencé de manière que, par suite d'un couplage cinématique avec les bras pivotants (6), il puisse être soulevé des cônes de serrage des outils à la position d'échange en haut, et puisse être abaissé sur ces cônes.

2. Magasin d'outils selon la revendication 1, caractérisé en ce que les petits chapeaux (26) sont montés sur une barre (27) disposée pivotante, par l'intermédiaire d'un mécanisme à leviers (30 à 35), aux bras pivotants (6).

3. Magasin d'outils selon la revendication 2, caractérisé en ce que le mécanisme à leviers comporte un double levier (35) monté oscillant en son milieu dans un bras pivotant (5, 6) en forme de caisson, une extrémité du double levier étant guidée dans une coulisse (40) solidaire de la table porte-pièce et son autre extrémité étant reliée par une cheville d'articulation (34) d'un support rotatif (32) à un levier coudé (28, 30) fixé rigidement à la barre (27).

4. Magasin d'outils selon l'une des revendications 1 à 3, caractérisé en ce que, pour chaque outil ou chaque cône de serrage d'un outil, on a prévu un petit chapeau protecteur (26) dont la forme est exactement adaptée à celle de l'outil ou du cône.

5. Magasin d'outils selon l'une des revendications 1 à 3, caractérisé en ce que les petits chapeaux sont formés par une auge fixée à la barre (27) et subdivisée en compartiments par des cloisons transversales.

6. Magasin d'outils selon l'une des revendications 1 à 5, caractérisé en ce que le capot (16) est monté entre deux bras porteurs horizontaux (13) fixés à la table porte-pièce (2) et que des tenons d'entraînement (21, 22), fixés aux bras pivotants (5, 6), pénétrent dans des fentes de guidage (19, 20) des parois latérales (17, 18) du capot (16) et sortent de ces fentes à des positions de pivotement déterminées, produisant ainsi l'ouverture et la fermeture du capot (16).

## Claims

1. Tool magazine, more particularly for milling and boring machines, with a straight tool carrier (3) containing a row of tool locators (4), with swivel arms (6) disposed laterally on the worktable (2), which move the tool carrier (3) by motor drive between a lower storage position and an upper changeover position, and with a flap (16) which is adapted to be actuated synchronously with the swivel arms (6) and which covers the tools in the storage position underneath the worktable (2), characterised in that a movable cover (25) with protective caps (26) for the tool clamping noses is disposed parallel to the tool carrier (3) and is adapted to be moved with the tool carrier (3) and, by a coupling of motions with the swivel arms (6), lifted from and lowered onto the tool clamping noses in the upper changeover position.

2. Tool magazine according to claim 1, characterised in that protective caps (26) are mounted on a strip (27) which is pivotably attached to the swivel arms (6) by means of a lever linkage (30 to 35).

3. Tool magazine according to claim 2, characterised in that the lever linkage contains a double lever (35) mounted centrally in the box-shaped swivel arm (5, 6) and with one end set in a rocker arm (40) fastened to the worktable, the other end thereof being joined via fulcrum studs (34) of a pivot joint (32) to a bent angle lever (28, 30) rigidly fastened to the strip (27).

4. Tool magazine according to one of claims 1 to 3, characterised in that for each tool, or each tool clamping nose, a protective cap (26) exactly adapted to the shape thereof is provided.

5. Tool magazine according to one of claims 1 to 3, characterised in that the protective caps are constituted by a tray fastened to the strip (27) and divided by transverse walls into compartments.

6. Tool magazine according to one of claims 1 to 5, characterised in that the flap (16) is mounted between two horizontal carrier arms (13) fastened to the worktable (2) and that driving pins (21, 22) are fastened to the swivel arms (5, 6) and in certain swivel positions pass into and out of engagement with slotted guides (19, 20) on the side walls (17, 18) of the hood-shaped flap (16) and thereby open and close the flap (16).

Fig.1

Fig.2